# EUROPEAN PATENT SPECIFICATION

(11) **EP 3 335 799 B1**
(45) Date of publication and mention of the grant of the patent: **27.05.2020**
(21) Application number: 17206872.8
(22) Date of filing: 13.12.2017
(51) Int. Cl.: B05B 13/02, B05B 16/00, B65G 45/22, B05B 12/16, B05B 14/20, B05B 14/462, B05B 14/49

(54) **APPARATUS AND METHOD FOR MANAGING RECOVERY COATING, PROVIDED WITH DISTILLER**
VORRICHTUNG UND VERFAHREN ZUR VERWALTUNG VON RÜCKGEWINNUNGSBESCHICHTUNG, MIT DESTILLATOR
APPAREIL ET PROCÉDÉ DE GESTION DE REVÊTEMENT DE RÉCUPÉRATION COMPORTANT UN DISTILLATEUR

(30) Priority: 16.12.2016 IT 201600127193
(43) Date of publication of application: 20.06.2018
(73) Proprietor: CEFLA SOCIETA' COOPERATIVA, 40026 Imola (BO) (IT)
(72) Inventor: GUIDUZZI, Andrea Luca, 48024 Massa Lombarda (RA) (IT)
(74) Representative: Villanova, Massimo

(56) References cited:
- EP-A1- 0 624 631
- EP-A2- 1 964 794
- US-A- 5 223 141

## Description

The present invention relates to the technical field of machines for spraying a coating on pieces to be coated, in particular to a method providing the recovery of the coating product through distillation of the liquids recovered in the cleaning process of the conveyer conveying the pieces to be coated.

In the present invention, coating product is a generic word comprising enamels, lacquers, clear coats, base coats, adhesives, glues, and other coatings having an organic base.

The pieces to be coated are preferably, but not exclusively, panels having two main dimensions, made of wood, plastics, glass, fibrocement, or any other material.

Apparatuses for spraying a coating product are known in in the art; such apparatuses comprise units for the recovery of the coating product that ended up on the conveyor of the pieces to be coated. E.g. EP1964794B1 in the name of the same applicant describes an apparatus of this kind.

A drawback of this kind of apparatus is the need of manual management of the solvents/cleaning liquids in the section pertaining to conveyor belt cleaning. The conveyor belt conveying the pieces to be painted is wetted with a solvent/cleaning liquid having the aim to facilitate the removal of the paint that ended up on the conveyor belt. Such solvent/liquid is then removed with the aid of rollers and doctor blades, and is collected in a recovery reservoir, from which is manually brought to recovery, and/or disposal and/or distillation.

The use of distillation for the reduction of the liquids resulting from the cleaning of the belt conveyor conveying the pieces to be coated is not described in the known art.

Nowadays, there is a strong request for apparatuses allowing to perform coating in a more ecological way. In fact, in such apparatuses a high quantity of cleaning liquid requiring disposal is produced.

Aim of the present invention is providing an apparatus and a method for spraying a coating product on objects, allowing to recovery such coating product and the distillation of the conveyor cleaning liquid (CCL), which is then re-inserted in the productive process.

This object is achieved by an apparatus and a method having the features of the independent claims. Advantageous embodiments and refinements are specified in claims dependent thereon.

The apparatus for the coating of objects according to the present invention comprises:
- A conveyor in the form of a closed circular band conveying the objects which undergo coating;
- A system for applying coating, known and which does not make the object of the present invention;
- A system recovering coating product from said conveyor;
- A cleaning system of the conveying belt providing the wetting of the belt with a suitable solvent/liquid (CCL);
- A system for the treatment, recovery and re-use of the CCL used in the cleaning system.

Said CCL used in the cleaning system can undergo a variety of treatments in the system for the treatment, e.g. physical separation of phases or distillation.

In particular, in the preferred embodiment, in the plant there is provided a distillation unit allowing to separate the saturated CCL into two portions: a first portion of solvent/liquid which can be recycled in the production cycle, and a second portion made of a solid residue or a very viscous residue. The residue is disposed of as dry, with a strong reduction of the quantity of material that has to be disposed of.

In its preferred embodiment, the method according to the present invention comprises the following steps:
- Providing a first and a second reserve reservoir of the CCL coming from cleaning trolley;
- Recirculating said CCL between said first reserve reservoir and cleaning trolley, while the second reservoir is empty;
- Calculating the quantity of coating sprayed by spraying guns; when said quantity exceeds a pre-set threshold, performing the switch so that the recirculation of the CCL occurs between said second reserve reservoir and cleaning trolley, while the first reserve reservoir channels saturated CCL to the distillation unit;
- Performing the distillation of saturated CCL coming from the first recirculating reservoir;
- Re-channelling distilled CCL to the first reserve reservoir, which is now empty;
- Performing another switch, so that the circulation of CCL occurs again between said first reserve reservoir and cleaning trolley, while the saturated CCL is channelled from said second reserve reservoir to said distillation unit;
- Disposing of the solids or at worst the very viscous liquid resulting from the distillation process.

A first advantage of the present invention is the automation of the process, which requires a minimum of manpower to work. Moreover, the used CCL is channelled inside a closed circuit not emitting polluting vapours. Finally, operators are required to perform a small effort for transporting liquids: in fact, the liquids to be transported are only those of new coating product and new solvent, which have to be inserted in the production circuit.

A second advantage of the present invention lies in the reduction of the volume of polluting liquids, and in the reduction of the volume of polluting solvents, too.

A third advantage of the present invention lies in a cheaper production process.

Further advantages and properties of the present invention are disclosed in the following description, in which exemplary embodiments of the present invention are explained in detail based on the drawings:
Figure 1 Schematic representation of a coating plant according to the present invention;
Figure 2 Axonometric view of a conveyor and cleaning trolley making part of a coating apparatus, with parts removed for better clarity;
Figure 3 Front section of a cleaning trolley.

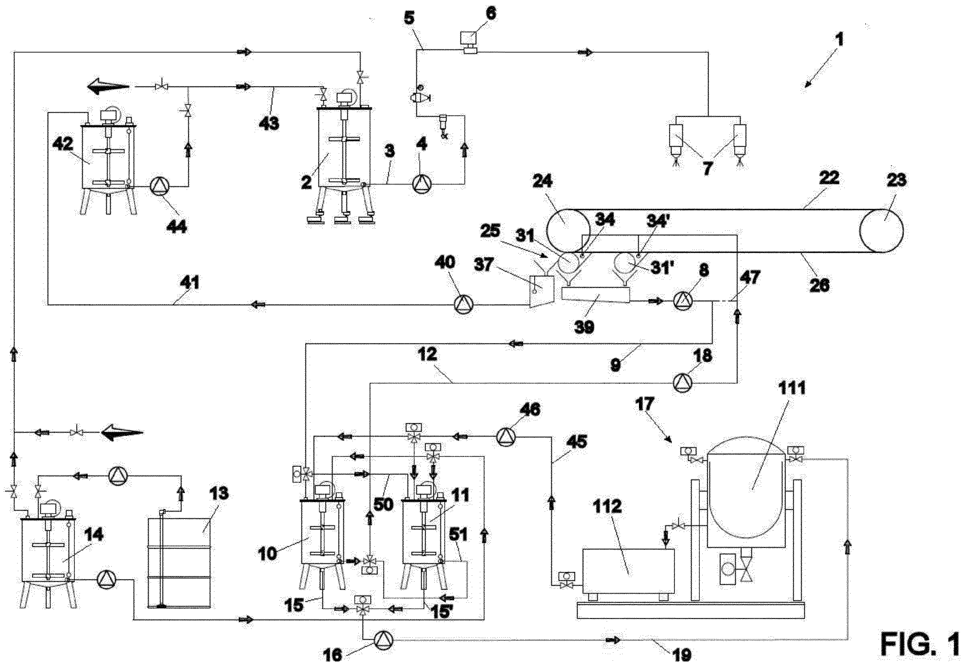

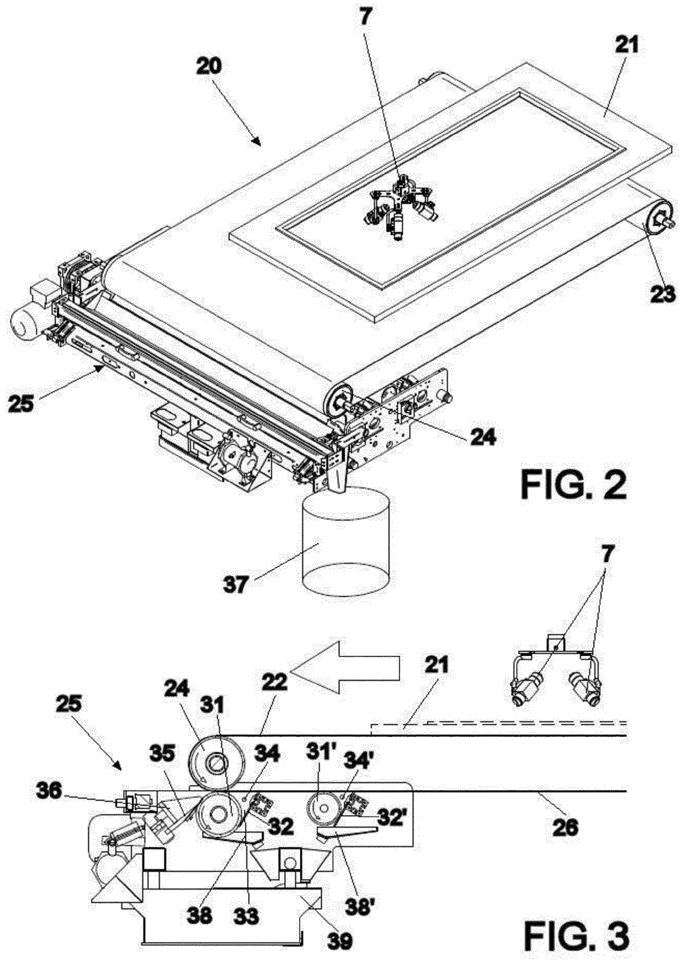

Figure 1 shows a schematic representation of a circuit 1 of the product used for coating. The circuit comprises a reservoir 2, inside which the coating product is manually or automatically loaded. Through a conduit 3 the coating product circulates through a pump 4, and through a conduit 5 it crosses a volumetric counter 6, and finally it is sprayed through at least a spraying gun 7 on a part 21 to be coated (visible in Figure 2).

When the coating product is sprayed on the part 21 to be coated, not all the coating product reaches part 21, but a given share of it ends up on the belt of conveyor 20. The belt must be cleaned before receiving a new part 21 to be coated.

As can be seen from Figure 2, the belt of conveyor 20 is a closed ring belt mounted on two rollers, a first motorized roller 23 and a second idle roller 24. Under said belt there is provided a cleaning trolley, per se known in the art.

Figure 3 shows a front section of said conveying belt 20, subdivided into its top branch 22 and lower branch 26, and of said cleaning roller 25. The big white arrow indicates the direction of motion.

The cleaning trolley 25 comprises a doctor blade 35 removing the still liquid coating from a reverse roller 31 (i.e. a counter-rotating cleaning roller adhering to the lower branch 26 of said conveyor) and conveying it through a ramp 36 to a collecting tank 37. Said coating product is channelled from said collecting tank 37 through a pump 40 and a conduit 41 to a coating product storage reservoir 42. From storage reservoir 42, through a conduit 43 and a pump 44 channels the recycled coating product is channelled to coating product reservoir 2, from which said coating product is channelled to spraying guns 7, in the above-described way.

In an alternative embodiment, said coating product is not recycled and is disposed of directly, as indicated by the two-coloured arrow.

Moreover, cleaning trolley 25 houses a first cleaning group comprising a reverse roller 31, which cooperating with a doctor blade 32 forms a space for accumulating CCL, which has the aim of keeping the surface of reverse roller 31 wet. The CCL reaches the accumulating space 33 through a nozzle 34.

Said CCL in part keeps the reverse roller 31 wet, and in part oozes in an underlying 38 hopper, and from here in a collecting and recirculating tank 39.

Through the reverse roller 31, the CCL wets the lower branch 26 of the conveying band. The end in contact with the lower branch 26 of said doctor blade 32 is made of plastics, and scrapes the lower branch 26 of the conveying band, removing coating residues, which fall into the accumulating space 33 and from here ooze in the collecting tank 39.

Optionally, a second cleaning group comprising a reverse roller 31', a doctor blade 32', a tank 38' and a nozzle 34' is placed downstream on the lower branch 26 of the conveying band, at a short distance from the first cleaning group comprising reverse roller 31, doctor blade 32, tank 38, nozzle 34. The presence of this second cleaning group, working in the same way as the first cleaning group, allows a better cleaning of the conveying band. The mixture CCL-coating collected from this second cleaning group falls into the same collecting tank 39.

In an alternative embodiment, there are provided two distinct collecting tank 39 and 39' (not shown). Collecting tank 39 collects said CCL coming from the first cleaning group (reverse roller 31, doctor blade 32, tank 38 and nozzle 34), while said tank 39' collects said CCL coming from the second cleaning group (reverse roller 31', doctor blade 32', tank 38' and nozzle 34').

The mixture CCL-coating collected in said tank 39 is suctioned by a pump 8 and channelled, through a conduit 9, to a first reserve reservoir 10 of the solvent. Said mixture is suctioned from reserve reservoir 10 through a pump 18 and channelled through a conduit 12 to said two nozzles 34, 34', so obtaining the recirculation of said mixture CCL-coating. The recirculation aims to limit the quantity of solvent used for cleaning.

Said recirculation works continuously for a pre-set time, up to when the mixture CCL-coating contained in the first reserve reservoir 10 is saturated, and cannot clean the conveying band any more. The recirculating time of the mixture CCL-coating is automatically fixed through the recording of the quantity of sprayed coating product measured e.g. through the volumetric counter 6. When the quantity of coating product sprayed by spraying guns 7 exceed the pre-set threshold, there is a switch in the supply of recirculated CCL, which is supplied now from a second reserve reservoir 11. Said reserve reservoir 11 had been previously filled with clean CCL, and after the switch, the recirculation for cleaning the conveyor occurs among reverse roller 31, doctor blade 32, tank 38, nozzle 34, reverse roller 31', doctor blade 32', tank 38', nozzle 34' and reserve reservoir 11.

In alternative embodiments, the calculation of the quantity of the sprayed coating product is performed in other ways, e.g. measuring the working time of the machine, the square metres of applied coating, or manually.

It is worth noting that a human operator sets up the recirculation time according to the features of the coating product, the duration of the working cycle, coating viscosity, time needed for distillation. The definition of this time requires empirical trials for each working cycle.

In an alternative embodiment, there is provided only one reserve reservoir 10. E.g. according to working cycles, the recirculating system works using one reserve reservoir 10 only, from which said CCL is sent to the distillation unit 17; distillation is performed e.g. during the night, when the coating product line is not working.

In the preferred embodiment, at the beginning of each working cycle, the first reserve reservoir is supplied with a pre-set quantity of CCL, e.g. 30 litres, which recirculates in the first recirculating unit comprising said first reservoir 10, reverse roller 31, doctor blade 32, tank 38, nozzle 34, reverse roller 31', doctor blade 32', tank 38', nozzle 34', up to the moment of the switch to the second recirculating unit, comprising in its turn said second reserve reservoir 11, reverse roller 31, doctor blade 32, tank 38, nozzle 34, reverse roller 31', doctor blade 32', tank 38', nozzle 34'. When the quantity of CCL inside in one of said reserve reservoir 10, 11 falls below a given threshold (e.g. 25 litres), detected by e.g. a ballcock device, the correct quantity (e.g. the said 30 litres) is restored supplying it from a reservoir 13 containing new solvent/CCL, used for the first time in the plant.

In a preferred embodiment, the solvent taken from solvent reservoir 13 is mixed with water in pre-set proportions inside a mixing reservoir 14, so that the CCL supplied to the cleaning trolley 25 is indeed a mixture.

The saturated CCL, alternatively present in the reserve reservoirs 10 and 11, is channelled through a respective conduit 15, 15' and a pump 16 and a successive conduit 19 to a treatment group 17, preferably a distillation group.

Said distillation group 17, known per se, comprises a distillation reservoir 111, inside which the mixture containing CCL and coating is brought to the boil. The steam is condensed: the vapours of pure solvent are distilled and collected in a collecting reservoir 112, and from here channelled through a conduit 45 and a pump 46 alternatively to the one of said reserve reservoirs 10, 11 of the solvent, which in that moment is not used for recirculation and is therefore empty. The fraction missing from the pre-set quantity (e.g. 30 litres) is supplied by said reservoir 13 containing new pure solvent.

Substantially, when the first recirculating unit comprising said first reserve reservoir 10, reverse roller 31, doctor blade 32, tank 38, nozzle 34, reverse roller 31', doctor blade 32', tank 38', nozzle 34' is active for coating recirculation, said second recirculating unit comprising reserve reservoir 11, in conduit 51, out conduit 50 is inactive. The second reserve reservoir 11, initially empty, receives the distilled coming from distillation reservoir 112. When the CCL circulating in the first recirculating unit is saturated, the switch reverses the situation: the second recirculating unit, comprising reverse roller 31, doctor blade 32, tank 38, nozzle 34, reverse roller 31', doctor blade 32', tank 38', nozzle 34' becomes active, while the first reserve reservoir 10 empties, channelling the saturated solvent to the distillation unit 17 through a pump 16 and a conduit 19. At a later stage, the first reserve reservoir 10 receives the distilled solvent coming from distillation reservoir 112 and fills up, so as to be ready for the successive switch.

In an alternative embodiment, there is provided a bypass 47 (indicated with a dotted line in Figure 1), connecting conduit 9 with conduit 12. In this way, all the CCL (e.g. 30 litres) initially present in the reserve reservoir 10 is collected in the collecting tank 39, and recirculation takes place among collecting tank 39, conduit 8, bypass 47, conduit 12, nozzles 34 and 34'. When CCL is saturated, a (not shown) three-way valve re-channels saturated CCL in the reserve reservoir 10, and from here saturated CCL goes to treatment unit 17 as already described. Apparently, the same occurs for reserve reservoir 11.

The distillation residue remaining in the distillation reservoir 111 can be solid, and in that case can be collected in a bag, or can be a very viscous liquid, which is poured in a tank and then disposed of according to existing regulations.
- 1: Coating plant
- 2: Reservoir
- 3: Conduit
- 4: Pump
- 5: Conduit
- 6: Volumetric counter
- 7: Gun
- 8: Pump
- 9: Conduit
- 10: First reserve reservoir
- 11: Second reserve reservoir
- 12: Conduit
- 13: Solvent reservoir
- 14: Mixing reservoir
- 15, 15': Conduit
- 16: Pump
- 17: Distillation group
- 18: Pump
- 19: Conduit
- 20: Conveyor
- 21: Part to be coated
- 22: Upper branch of conveying band
- 23: Motorized roller
- 24: Idle roller
- 25: Cleaning trolley
- 26: Lower branch of conveying band
- 31: Reverse roller
- 32: Doctor blade
- 33: Accumulating space
- 34: Solvent nozzle
- 35: Doctor blade
- 36: Tank
- 37: Tank
- 38: Tank
- 39: Collecting tank
- 40: Pump
- 41: Conduit
- 42: Coating storage reservoir
- 43: Conduit
- 44: Pump
- 45: Conduit
- 46: Pump
- 47: Bypass
- 50: Conduit
- 51: Conduit
- 111: Distillation reservoir
- 112: Collecting reservoir of distilled solvent

## Claims

1. Method for coating parts (21) performed in a plant (1) wherein the plant (1) comprises:
- a conveyor (20) for conveying a part (21) to be coated, wherein said conveyor comprises an upper branch (22) and a lower branch (26);
- a coating machine spraying a coating product on a part (21) during its conveying on said upper branch (22);
- a cleaning unit of said lower branch (26) comprising a reverse roller (31), a doctor blade (32), a tank (38), a nozzle (34) for the removal of coating which is suitable for applying to said lower branch (26) a cleaning fluid (CCL) containing solvent and to collect in said cleaning fluid said coating product removed from said lower branch (26);
- a reserve reservoir (10) for the cleaning fluid containing cleaning fluid, wherein said cleaning unit (31, 32, 34, 38, 39) is connectable to said reserve reservoir (10) to receive from it said cleaning fluid and to supply it with the cleaning fluid in which coating product was collected;
- a group (17) for treating said cleaning fluid, connectable to said reserve reservoir (10), wherein said treatment group receives said cleaning fluid from said reserve reservoir, to separate a pure solvent from the residues of the coating product, and to supply the treated solvent to said reserve reservoir (10) in order to make the cleaning fluid more effective;
said method **characterized by** the following steps:
- providing a first reserve reservoir (10) of the cleaning fluid coming from said cleaning unit (31, 32, 34, 38, 39 and optionally 31', 32', 34', 38', 39);
- Recirculating said cleaning fluid between said first reserve reservoir (10) and said cleaning unit (31, 32, 34, 38, 39 and optionally 31', 32', 34', 38', 39);
- Calculating the quantity of coating product sprayed by spraying guns (7); when said quantity exceeds a pre-set threshold, performing the switch so said cleaning fluid is channelled to said group (17) for treating said cleaning fluid;
- Performing the treatment of saturated cleaning fluid coming from said first reserve reservoir (10), preferably a distillation;
- Re-channelling treated solvent to said first recirculating reservoir (10), which is now empty;
- Disposing of the solids or at worst the very viscous liquid resulting from the treatment process.

2. Method for coating parts (21) according to claim 1, further comprising the following steps:
- Providing a second reserve reservoir (11) of the cleaning fluid coming from cleaning unit (31, 32, 34, 38, 39 and optionally 31', 32', 34', 38', 39);
- Recirculating the cleaning fluid between said first reservoir (10) and cleaning units while said second reservoir (11) is empty;
- Calculating the quantity of coating product sprayed by spraying guns (7); when said quantity exceeds a pre-set threshold, performing the switch so that the recirculation of the solvent occurs between said second reservoir (11) and cleaning units, while the first reservoir (10) channels saturated solvent to the group (17) for the treatment of cleaning unit;
- Performing the treatment of saturated cleaning fluid coming from the first reserve reservoir (10), preferably a distillation;
- Re-channelling treated solvent to the first reserve reservoir (10), which is now empty;
- Performing another switch, so that the recirculation of solvent occurs again between said first reservoir (10) and cleaning units, while the saturated cleaning fluid is channelled from said second reservoir (11) to said group (17) for the treatment of cleaning unit;
- Disposing of the solids or at worst the very viscous liquid resulting from the treatment process.

3. Method for coating parts (21) according to claim 2, wherein the switch between first recirculating unit (10, 31, 32, 34, 38, 39) and second recirculating unit (11, 31, 32, 34, 38, 39) is automatically controlled through the monitoring of the quantity of coating product sprayed on the parts to be coated, or plant working time, or measuring the square meters of applied coating, or manually.

4. Method for coating parts (21) according to claims 1-3, wherein the pre-set threshold for the switching of the active recirculating unit is set by a human operator according to the features of the coating product, duration of working cycle, viscosity of coating product, time needed for treatment of cleaning fluid.

5. Method for coating parts (21) according to any one of claims 1-4, wherein said plant further comprises a further reserve reservoir (11), containing cleaning fluid too, also connectable to cleaning unit (31, 32, 34, 38, 39) to receive from it said cleaning fluid wherein said coating product was collected and supply to it said cleaning fluid; said further reserve reservoir (11) being connected to said group (17) for treating said cleaning fluid, to receive from it the treated solvent separated from the residues of coating product, and to supply to it said cleaning fluid.

6. Method for coating parts (21) according to claim 5, wherein first recirculating unit (10, 31, 32, 38, 34, 39) and second recirculating unit (11, 31, 32, 38, 34, 38, 39) are alternatively active for the recirculation of cleaning fluid, and wherein the inactive recirculating unit channels saturated solvent to said group (17) for treating cleaning fluid, or is supplied with treated solvent from said group (17) for treating cleaning fluid.

7. Method for coating parts (21) according to any one of claims 1-6, wherein there is provided a second cleaning group comprising a reverse roller (31'), a doctor blade (32'), a nozzle (34'), a tank (38'), placed downstream said first cleaning group (31, 32, 34, 38, 39).

8. Method for coating parts (21) according to any one of claims 1-7, comprising a bypass (47), and wherein said reserve reservoirs (10 or 11) initially channel said cleaning fluid to said collecting tank (39), and recirculation takes place among said collecting tank (39), conduit (8), bypass (47), conduit (12), nozzles (34 and 34'); when cleaning fluid is saturated, a (not shown) three-way valve re-channels said saturated cleaning fluid in a reserve reservoir (10 or 11), and from here saturated cleaning fluid goes to said group (17) for treating cleaning fluid.

9. Method for coating parts (21) according to any one of claims 1-8, wherein said group (17) for treating said cleaning fluid is a distillation unit.

10. Plant (1) for coating parts, comprising:
- a conveyor (20) for conveying a part (21) to be coated, wherein said conveyor comprises an upper branch (22) and a lower branch (26);
- a coating machine spraying a coating product on a part (21) during its conveying on said upper branch (22);
- a cleaning unit of said lower branch (26) comprising a reverse roller (31), a doctor blade (32), a tank (38), a nozzle (34) for the removal of coating which is suitable for applying to said lower branch (26) a cleaning fluid (CCL) containing solvent and to collect in said cleaning fluid said coating product removed from said lower branch (26);
- a reserve reservoir (10) for the cleaning fluid containing cleaning fluid, wherein said cleaning unit (31, 32, 34, 38, 39) is connectable to said reserve reservoir (10), to receive from it said cleaning fluid, and to supply it with the cleaning fluid in which coating product was collected;
**characterized by** comprising:
- a group (17) for treating said cleaning fluid, connectable to said reserve reservoir (10), wherein said treatment group receives said cleaning fluid from said reserve reservoir, to separate a pure solvent from the residues of the coating product, and to supply the treated solvent to said reserve reservoir (10) in order to make the cleaning fluid more effective;
- a further reserve reservoir (11), containing cleaning fluid too, also connectable to cleaning unit (31, 32, 34, 38, 39) to receive from it said cleaning fluid wherein said coating product was collected and supply to it said cleaning fluid, said further reserve reservoir (11) being connectable to said group (17) for treating said cleaning fluid, to receive from it the treated solvent separated from the residues of coating product, and to supply to it said cleaning fluid;
wherein first recirculating unit (10, 31, 32, 38, 34, 39) and second recirculating unit (11, 31, 32, 38, 34, 38, 39) are alternatively active for the recirculation of cleaning fluid, and wherein the inactive recirculating unit channels saturated solvent to said group (17) for treating cleaning fluid, or is supplied with treated solvent from said group (17) for treating cleaning fluid.

11. Plant (1) for coating parts (21) according to claim 10, wherein there is provided a second cleaning group comprising a reverse roller (31'), a doctor blade (32'), a nozzle (34'), a tank (38'), placed downstream said first cleaning group (31, 32, 34, 38, 39).

12. Plant (1) for coating parts (21) according to claim 10 or 11, comprising a bypass (47), and wherein said reserve reservoirs (10 or 11) initially channel said cleaning fluid to said collecting tank (39), and recirculation takes place among said collecting tank (39), conduit (8), bypass (47), conduit (12), nozzles (34 and 34'); when cleaning fluid is saturated, a (not shown) three-way valve re-channels said saturated cleaning fluid in a reserve reservoir (10 or 11), and from here saturated cleaning fluid goes to said group (17) for treating cleaning fluid.

13. Plant (1) for coating parts (21) according to any one of claims 10 to 12, wherein said group (17) for treating said cleaning fluid is a distillation unit.

## Patentansprüche

1. Verfahren zum Beschichten von Teilen (21), das in einer Anlage (1) durchgeführt wird, wobei die Anlage (1) Folgendes aufweist:
- einen Förderer (20) zum Fördern eines zu beschichtenden Teils (21), wobei der Förderer ein oberes Trumm (22) und ein unteres Trumm (26) aufweist;
- eine Beschichtungsmaschine, die ein Beschichtungsprodukt auf ein Teil (21) während seiner Förderung auf dem oberen Trumm (22) sprüht;
- eine Reinigungseinheit des unteren Trumms (26), die eine Umkehrrolle (31), eine Doktorklinge (32), einen Tank (38), eine Düse (34) zum Entfernen der Beschichtung aufweist, die geeignet ist, auf das untere Trumm (26) eine Reinigungsflüssigkeit (CCL) zu applizieren, die ein Lösungsmittel enthält, und das Reinigungsfluid des von dem unteren Trumm (26) entfernten Beschichtungsproduktes zu sammeln;
- ein Umkehrreservoir (10) für das Reinigungsfluid, das Reinigungsfluid enthält, wobei die Reinigungseinheit (31, 32, 34, 38, 39) mit dem Umkehrreservoir (10) verbindbar ist, um davon das Reinigungsfluid zu erhalten und um es mit dem Reinigungsfluid zu versorgen, in dem das Beschichtungsprodukt gesammelt wurde;
- eine Gruppe (17) zum Behandeln des Reinigungsfluids, die mit dem Umkehrreservoir (10) verbindbar ist, wobei die Behandlungsgruppe das Reinigungsfluid von dem Umkehrreservoir erhält, um ein reines Lösungsmittel von den Resten des Beschichtungsproduktes zu trennen, und um das behandelte Lösungsmittel dem Umkehrreservoir (10) zuzuführen, um das Reinigungsfluid effektiver zu machen;
wobei das Verfahren durch die folgenden Schritte gekennzeichnet ist:
- Bereitstellen eines ersten Reservereservoirs (10) für das Reinigungsfluid, das von der Reinigungseinheit (31, 32, 34, 38, 39 und optional 31', 32', 34', 38', 39) kommt;
- Wiederzuführen des Reinigungsfluids zwischen dem ersten Reservereservoir (10) und der Reinigungseinheit (31, 32, 34, 38, 39 und optional 31', 32', 34', 38', 39);
- Berechnen der Menge von Beschichtungsprodukt, das mittels Spritzpistolen (7) gesprüht wird; wenn die Menge einen vorbestimmten Grenzwert überschreitet, Durchführen der Schaltung, so dass das Reinigungsfluid zu der Gruppe (17) geleitet wird, um das Reinigungsfluid zu behandeln;
- Durchführen der Behandlung von gesättigtem Reinigungsfluid, das von dem ersten Reservereservoir (10) kommt, vorzugsweise in Form einer Destillation;
- Wiederzuführen des behandelten Lösungsmittels zu dem ersten Rezirkulationsreservoir (10), das jetzt leer ist;
- Entsorgen der Feststoffe oder schlimmstenfalls der sehr viskosen Flüssigkeit, die aus dem Behandlungsprozess hervorgeht.

2. Verfahren zum Beschichten von Teilen (21) nach Anspruch 1, das ferner die folgenden Schritte umfasst:
- Bereitstellen eines zweiten Reservereservoirs (11) für Reinigungsfluid, das von der Reinigungseinheit (31, 32, 34, 38, 39 und optional 31', 32', 34', 38', 39) kommt;
- Wiederzuführen des Reinigungsfluids zwischen dem ersten Reservoir (10) und den Reinigungseinheiten, während das zweite Reservoir (11) leer ist;
- Berechnen der Menge von Beschichtungsprodukt, das mittels Spritzpistolen (7) gesprüht wird; wenn die Menge einen vorbestimmten Grenzwert überschreitet, Durchführen der Schaltung, so dass die Wiederzuführung des Lösungsmittels zwischen dem zweiten Reservoir (11) und den Reinigungseinheiten erfolgt, während das erste Reservoir (10) der Gruppe (17) gesättigtes Lösungsmittel zur Behandlung der Reinigungseinheit zuführt;
- Durchführen der Behandlung von gesättigtem Reinigungsfluid, das von dem ersten Reservereservoir (10) kommt, vorzugsweise in Form einer Destillation;
- Wiederzuführen von behandeltem Lösungsmittel zu dem ersten Reservereservoir (10), das jetzt leer ist;
- Durchführen einer anderen Schaltung, so dass die Wiederzuführung von Lösungsmittel wieder zwischen dem ersten Reservoir (10) und Reinigungseinheiten erfolgt, während das gesättigte Reinigungsfluid von dem zweiten Reservoir (11) zu der Gruppe (17) zur Behandlung der Reinigungseinheiten zugeführt wird;
- Entsorgen der Feststoffe oder schlimmstenfalls der sehr viskosen Flüssigkeit, die aus dem Behandlungsverfahren hervorgeht.

3. Verfahren zum Beschichten von Teilen (21) nach Anspruch 2, bei dem die Umschaltung zwischen der ersten Rezirkulationseinheit (10, 31, 32, 34, 38, 39) und der zweiten Rezirkulationseinheit (11, 31, 32, 34, 38, 39) automatisch mittels der Überwachung der Menge von Beschichtungsprodukt gesteuert wird, das auf das zu beschichtende Teil gesprüht wird, oder durch die Anlagearbeitszeit, oder durch das Messen der Quadratmeter von applizierter Beschichtung, oder manuell durchgeführt wird.

4. Verfahren zum Beschichten von Teilen (21) nach den Ansprüchen 1-3, bei dem der voreingestellte Grenzwert zum Umschalten der aktiven Rezirkulationseinheit durch eine menschliche Bedienungsperson gemäß den Merkmalen des Beschichtungsproduktes, der Dauer des Arbeitszyklus, der Viskosität des Beschichtungsproduktes, der für die Behandlung des Reinigungsfluids benötigten Zeit eingestellt wird.

5. Verfahren zum Beschichten von Teilen (21) nach einem der Ansprüche 1-4, bei dem die Anlage ferner ein weiteres Reservereservoir (11) aufweist, das auch Reinigungsfluid enthält, das auch mit der Reinigungseinheit (31, 32, 34, 38, 39) verbindbar ist, um davon Reinigungsfluid zu erhalten, indem das Beschichtungsprodukt gesammelt wurde, und um dieses dem Reinigungsfluid zuzuführen; wobei das weitere Reservereservoir (11) mit der Gruppe (17) verbunden ist, um das Reinigungsfluid zu behandeln, um davon das behandelte Lösungsmittel zu erhalten, das von den Rückständen des Beschichtungsproduktes getrennt wird, und um dieses zu dem Reinigungsfluid zuzuführen.

6. Verfahren zum Beschichten von Teilen (21) nach Anspruch 5, bei dem die erste Rezirkulationseinheit (10, 31, 32, 38, 34, 39) und die zweite Rezirkulationseinheit (11, 31, 32, 38, 34, 38, 39) abwechselnd für die Rezirkulation von Reinigungsfluid aktiv sind, und wobei die inaktive Rezirkulationseinheit das gesättigte Lösungsmittel zu der Gruppe (17) zuführt, um das Reinigungsfluid zu behandeln, oder mit behandeltem Lösungsmittel von der Gruppe (17) versorgt wird, um Reinigungsfluid zu behandeln.

7. Verfahren zum Beschichten von Teilen (21) nach irgendeinem der Ansprüche 1-6, wobei eine zweite Reinigungsgruppe vorgesehen ist, die eine Umkehrrolle (31'), eine Doktorklinge (32'), eine Düse (34'), einen Tank (38') aufweist, die stromabwärts der ersten Reinigungsgruppe (31, 32, 34, 38, 39) angeordnet ist.

8. Verfahren zum Beschichten von Teilen (21) nach irgendeinem der Ansprüche 1-7, umfassend einen Bypass (47), und wobei die Reservereservoirs (10 oder 11) anfangs das Reinigungsfluid dem Sammeltank (39) zuführen, und wobei die Rezirkulation zwischen dem Sammeltank (39), dem Kanal (8), dem Bypass (47), dem Kanal (12), den Düsen (34 und 34') stattfindet; wenn das Reinigungsfluid gesättigt ist, ein (nicht dargestelltes) Dreh-Wege-Ventil, das gesättigte Reinigungsfluid in ein Reservereservoir (10 oder 11) umlenkt, und von dort gesättigtes Reinigungsfluid zu der Gruppe (17) gelangt, um das Reinigungsfluid zu behandeln.

9. Verfahren zum Beschichten von Teilen (21) nach irgendeinem der Ansprüche 1-8, bei dem die Gruppe (17) zum Behandeln der Reinigungsfluid eine Destillationseinheit ist.

10. Anlage (1) zum Beschichten von Teilen, die Folgendes aufweist:
- einen Förderer (20) zum Fördern eines zu beschichtenden Teils (21), wobei der Förderer ein oberes Trumm (22) und ein unteres Trumm (26) aufweist;
- eine Beschichtungsmaschine, die ein Beschichtungsprodukt auf ein Teil (21) während seiner Förderung auf dem oberen Trumm (22) aufsprüht;
- eine Reinigungseinheit des unteren Trumms (26), die eine Umkehrrolle (31), eine Doktorklinge (32), einen Tank (38), eine Düse (34) zum Entfernen von Beschichtung aufweist, die geeignet ist, um auf das untere Trumm (26) ein Reinigungsfluid (CCL) zu applizieren, das Lösungsmittel enthält, und um in dem Reinigungsfluid das von dem unteren Trumm (26) entfernte Beschichtungsprodukt zu sammeln;
- ein Reservereservoir (10) für das Reinigungsfluid, das Reinigungsfluid enthält, wobei die Reinigungseinheit (31, 32, 34, 38, 39) mit dem Reservereservoir (10) verbindbar ist, um davon das Reinigungsfluid zu erhalten, und um dieses mit dem Reinigungsfluid in dem das Beschichtungsprodukt gesammelt wurde, zu versorgen;
**dadurch gekennzeichnet, dass** sie Folgendes aufweist:
- eine Gruppe (17) zum Behandeln des Reinigungsfluids, die mit dem Reservereservoir (10) verbindbar ist, wobei die Behandlungsgruppe das Reinigungsfluid von dem Reservereservoir erhält, um ein reines Lösungsmittel von den Resten des Beschichtungsproduktes zu trennen, und um das behandelte Lösungsmittel dem Reservereservoir zuzuführen, um das Reinigungsfluid effektiver zu machen;
- ein weiteres Reservereservoir (11), das auch Reinigungsfluid enthält, das auch mit der Reinigungseinheit (31, 32, 34, 38, 39) verbindbar ist, um davon das Reinigungsfluid zu erhalten, indem das Beschichtungsprodukt gesammelt wurde, und um diesem das Reinigungsfluid zuzuführen, wobei das weitere Reservereservoir (11) mit der Gruppe (17) verbindbar ist, um das Reinigungsfluid zu behandeln, um davon das behandelte Lösungsmittel zu erhalten, das von den Resten des Beschichtungsproduktes getrennt ist, und um dieses zu dem Reinigungsfluid zuzuführen;
wobei die erste Rezirkulationseinheit (10, 31, 32, 38, 34, 39) und die zweite Rezirkulationseinheit (11, 31, 32, 38, 34, 38, 39) abwechselnd für die Rezirkulation von Reinigungsfluid aktiv sind, und wobei die inaktive Rezirkulationseinheit gesättigtes Lösungsmittel zu der Gruppe (17) zuführt, um das Reinigungsfluid zu behandeln, oder mit behandeltem Lösungsmittel von der Gruppe (17) versorgt wird, um Reinigungsfluid zu behandeln.

11. Anlage (1) zum Beschichten von Teilen (21) nach Anspruch 10, wobei eine zweite Reinigungsgruppe vorgesehen ist, die eine Umkehrrolle (31'), eine Doktorklinge (32'), eine Düse (34'), einen Tank (38') vorgesehen ist, der stromabwärts der ersten Reinigungsgruppe (31, 32, 34, 38, 39) angeordnet ist.

12. Anlage (1) zum Beschichten von Teilen (21) nach Anspruch 10 oder 11, die einen Bypass (47) aufweist, und wobei die Reservereservoirs (10 oder 11) anfangs das Reinigungsfluid zu dem Sammeltank (39) leiten, und wobei die Wiederzuführung zwischen dem Sammeltank (39), dem Kanal (8), dem Bypass (47), dem Kanal (12), den Düsen (34 und 34') erfolgt; wenn das Behandlungsfluid gesättigt ist, ein (nicht dargestelltes) Drei-Wege-Ventil, das gesättigte Reinigungsfluid in ein Reservereservoir (10 oder 11) umleitet, und von hier das gesättigte Reinigungsfluid zu der Gruppe (17) gelangt, um das Reinigungsfluid behandeln.

13. Anlage (1) zum Beschichten von Teilen (21) nach irgendeinem der Ansprüche 10 bis 12, wobei die Gruppe (17) zum Behandeln des Reinigungsfluids eine Destillationseinheit ist.

## Revendications

1. Procédé pour revêtir des pièces (21) mis en œuvre dans une installation (1), dans lequel l'installation (1) comprend :
- un convoyeur (20) pour convoyer une pièce (21) à revêtir, dans lequel ledit convoyeur comprend une branche supérieure (22) et une branche inférieure (26) ;
- une machine de revêtement pulvérisant un produit de revêtement sur une pièce (21) pendant son transport sur ladite branche supérieure (22) ;
- une unité de nettoyage de ladite branche inférieure (26) comprenant un rouleau inverse (31), une racle (32), un réservoir (38), une buse (34) pour le retrait de produit de revêtement, laquelle est adaptée pour appliquer à ladite branche inférieure (26) un fluide de nettoyage (CCL) contenant un solvant et pour recueillir dans ledit fluide de nettoyage ledit produit de revêtement retiré de ladite branche inférieure (26) ;
- un réservoir de réserve (10) pour le fluide de nettoyage contenant du fluide de nettoyage, dans lequel ladite unité de nettoyage (31, 32, 34, 38, 39) peut être reliée audit réservoir de réserve (10) pour recevoir de celui-ci ledit fluide de nettoyage et pour l'alimenter en fluide de nettoyage dans lequel le produit de revêtement a été recueilli ;
- un groupe (17) pour traiter ledit fluide de nettoyage, pouvant être relié audit réservoir de réserve (10), dans lequel ledit groupe de traitement reçoit ledit fluide de nettoyage provenant dudit réservoir de réserve, pour séparer un solvant pur des résidus du produit de revêtement, et pour alimenter ledit réservoir de réserve (10) en solvant traité afin de rendre le fluide de nettoyage plus efficace ;
ledit procédé étant **caractérisé par** les étapes suivantes :
- fournir un premier réservoir de réserve (10) du fluide de nettoyage provenant de ladite unité de nettoyage (31, 32, 34, 38, 39 et facultativement 31', 32', 34', 38', 39) ;
- remettre en circulation ledit fluide de nettoyage entre ledit premier réservoir de réserve (10) et ladite unité de nettoyage (31, 32, 34, 38, 39 et facultativement 31', 32', 34', 38', 39) ;
- calculer la quantité de produit de revêtement pulvérisé par des pistolets de pulvérisation (7) ; lorsque ladite quantité dépasse un seuil préétabli, effectuer le basculement de sorte que ledit fluide de nettoyage soit canalisé jusqu'audit groupe (17) de traitement dudit fluide de nettoyage ;
- réaliser le traitement de fluide de nettoyage saturé provenant dudit premier réservoir de réserve (10), de préférence une distillation ;
- re-canaliser le solvant traité jusqu'audit premier réservoir de recirculation (10), qui est à présent vide ;
- éliminer les matières solides ou au pire le liquide très visqueux résultant du processus de traitement.

2. Procédé pour revêtir des pièces (21) selon la revendication 1, comprenant en outre les étapes suivantes :
- fournir un second réservoir de réserve (11) du fluide de nettoyage provenant de l'unité de nettoyage (31, 32, 34, 38, 39 et facultativement 31', 32', 34', 38', 39) ;
- remettre en circulation le fluide de nettoyage entre ledit premier réservoir (10) et des unités de nettoyage lorsque ledit second réservoir (11) est vide ;
- calculer la quantité de produit de revêtement pulvérisé par des pistolets de pulvérisation (7) ; lorsque ladite quantité dépasse un seuil prédéfini, effectuer le basculement de sorte que la recirculation du solvant ait lieu entre ledit second réservoir (11) et des unités de nettoyage, pendant que le premier réservoir (10) canalise le solvant saturé jusqu'au groupe (17) pour le traitement de l'unité de nettoyage ;
- réaliser le traitement de fluide de nettoyage saturé provenant du premier réservoir de réserve (10), de préférence une distillation ;
- re-canaliser le solvant traité vers ledit premier réservoir de réserve (10), qui est à présent vide ;
- réaliser un autre basculement, de sorte que la recirculation de solvant ait de nouveau lieu entre ledit premier réservoir (10) et des unités de nettoyage, lorsque le fluide de nettoyage saturé est canalisé dudit second réservoir (11) audit groupe (17) pour le traitement de l'unité de nettoyage ;
- éliminer les matières solides ou au pire le liquide très visqueux résultant du processus de traitement.

3. Procédé pour revêtir des pièces (21) selon la revendication 2, dans lequel le basculement entre la première unité de recirculation (10, 31, 32, 34, 38, 39) et la seconde unité de recirculation (11, 31, 32, 34, 38, 39) est automatiquement commandée par la surveillance de la quantité de produit de revêtement pulvérisé sur les pièces à revêtir, ou un temps de travail d'installation, ou la mesure des mètres carré de produit de revêtement appliqué, ou manuellement.

4. Procédé pour revêtir des pièces (21) selon les revendications 1 à 3, dans lequel le seuil préétabli pour le basculement de l'unité de recirculation active est fixé par un opérateur humain en fonction des caractéristiques du produit de revêtement, de la durée de cycle de travail, de la viscosité du produit de revêtement, du temps nécessaire pour le traitement du fluide de nettoyage.

5. Procédé pour revêtir des pièces (21) selon l'une quelconque des revendications 1 à 4, dans lequel ladite installation comprend en outre un réservoir de réserve supplémentaire (11), contenant aussi du fluide de nettoyage, pouvant également être relié à l'unité de nettoyage (31, 32, 34, 38, 39) pour recevoir de celle-ci ledit fluide de nettoyage dans lequel ledit produit de revêtement a été recueilli et pour l'alimenter en dit fluide de nettoyage ; ledit réservoir de réserve supplémentaire (11) étant relié audit groupe (17) de traitement dudit fluide de nettoyage, pour recevoir de celui-ci le solvant traité séparé des résidus de produit de revêtement, et pour l'alimenter en dit fluide de nettoyage.

6. Procédé pour revêtir des pièces (21) selon la revendication 5, dans lequel une première unité de recirculation (10, 31, 32, 38, 34, 39) et une seconde unité de recirculation (11, 31, 32, 38, 34, 38, 39) sont alternativement actives pour la recirculation de fluide de nettoyage, et dans lequel l'unité de recirculation inactive canalise du solvant saturé jusqu'audit groupe (17) de traitement de fluide de nettoyage, ou est alimentée en solvant traité provenant dudit groupe (17) de traitement de fluide de nettoyage.

7. Procédé pour revêtir des pièces (21) selon l'une quelconque des revendications 1 à 6, dans lequel il est prévu un second groupe de nettoyage comprenant un rouleau inverse (31'), une racle (32'), une buse (34'), un réservoir (38'), placé en aval dudit premier groupe de nettoyage (31, 32, 34, 38, 39).

8. Procédé pour revêtir des pièces (21) selon l'une quelconque des revendications 1 à 7, comprenant une dérivation (47), et dans lequel lesdits réservoirs de réserve (10 ou 11) canalisent initialement ledit fluide de nettoyage jusqu'audit réservoir de collecte (39), et une recirculation a lieu parmi lesdits réservoir de collecte (39), conduite (8), dérivation (47), conduite (12), buses (34 et 34') ; lorsque le fluide de nettoyage est saturé, une vanne à trois voies (non représentée) re-canalise ledit fluide de nettoyage saturé dans un réservoir de réserve (10 ou 11), et à partir de là, le fluide de nettoyage saturé va jusqu'audit groupe (17) de traitement de fluide de nettoyage.

9. Procédé pour revêtir des pièces (21) selon l'une quelconque des revendications 1 à 8, dans lequel ledit groupe (17) de traitement dudit fluide de nettoyage est une unité de distillation.

10. Installation (1) pour revêtir des pièces, comprenant :
- un convoyeur (20) pour convoyer une pièce (21) à revêtir, dans lequel ledit convoyeur comprend une branche supérieure (22) et une branche inférieure (26) ;
- une machine de revêtement pulvérisant un produit de revêtement sur une pièce (21) pendant son transport sur ladite branche supérieure (22) ;
- une unité de nettoyage de ladite branche inférieure (26) comprenant un rouleau inverse (31), une racle (32), un réservoir (38), une buse (34) pour le retrait de revêtement qui est adaptée pour appliquer à ladite branche inférieure (26) un fluide de nettoyage (CCL) contenant un solvant et pour recueillir dans ledit fluide de nettoyage ledit produit de revêtement retiré de ladite branche inférieure (26) ;
- un réservoir de réserve (10) pour le fluide de nettoyage contenant du fluide de nettoyage, dans lequel ladite unité de nettoyage (31, 32, 34, 38, 39) peut être reliée audit réservoir de réserve (10) pour recevoir de celui-ci ledit fluide de nettoyage, et pour l'alimenter en fluide de nettoyage dans lequel du produit de revêtement a été recueilli ;
**caractérisée en ce qu'**elle comprend :
- un groupe (17) pour traiter ledit fluide de nettoyage, pouvant être relié audit réservoir de réserve (10), dans lequel ledit groupe de traitement reçoit ledit fluide de nettoyage provenant dudit réservoir de réserve, pour séparer un solvant pur des résidus du produit de revêtement, et pour alimenter ledit réservoir de réserve (10) en solvant traité afin de rendre le fluide de nettoyage plus efficace ;
- un réservoir de réserve supplémentaire (11), contenant aussi du fluide de nettoyage, pouvant également être relié à l'unité de nettoyage (31, 32, 34, 38, 39) pour recevoir de celle-ci ledit fluide de nettoyage dans lequel ledit produit de revêtement a été recueilli et pour l'alimenter en dit fluide de nettoyage, ledit réservoir de réserve supplémentaire (11) pouvant être relié audit groupe (17) de traitement dudit fluide de nettoyage, pour recevoir de celui-ci le solvant traité séparé des résidus de produit de revêtement, et pour l'alimenter en dit fluide de nettoyage ;
dans laquelle une première unité de recirculation (10, 31, 32, 38, 34, 39) et une seconde unité de recirculation (11, 31, 32, 38, 34, 38, 39) sont alternativement actives pour la recirculation de fluide de nettoyage, et dans lequel l'unité de recirculation inactive canalise du solvant saturé jusqu'audit groupe (17) de traitement de fluide de nettoyage, ou est alimentée en solvant traité provenant dudit groupe (17) de traitement de fluide de nettoyage.

11. Installation (1) pour revêtir des pièces (21) selon la revendication 10, dans laquelle il est prévu un second groupe de nettoyage comprenant un rouleau inverse (31'), une racle (32'), une buse (34'), un réservoir (38'), placé en aval dudit premier groupe de nettoyage (31, 32, 34, 38, 39).

12. Installation (1) pour revêtir des pièces (21) selon la revendication 10 ou 11, comprenant une dérivation (47), et dans laquelle lesdits réservoirs de réserve (10 ou 11) canalisent initialement ledit fluide de nettoyage jusqu'audit réservoir de collecte (39), et une recirculation a lieu parmi lesdits réservoir de collecte (39), conduite (8), dérivation (47), conduite (12), buses (34 et 34') ; lorsque le fluide de nettoyage est saturé, une vanne à trois voies (non représentée) re-canalise ledit fluide de nettoyage saturé dans un réservoir de réserve (10 ou 11), et à partir de là, le fluide de nettoyage saturé va jusqu'audit groupe (17) de traitement de fluide de nettoyage.

13. Installation (1) pour revêtir des pièces (21) selon l'une quelconque des revendications 10 à 12, dans laquelle ledit groupe (17) de traitement dudit fluide de nettoyage est une unité de distillation.
